Europäisches Patentamt

European Patent Office

Office européen des brevets

(11) Veröffentlichungsnummer: **0 398 111**
**A1**

## EUROPÄISCHE PATENTANMELDUNG

(21) Anmeldenummer: **90108528.2**

(22) Anmeldetag: **07.05.90**

(51) Int. Cl.⁵: **H01M 8/24, H01M 8/06**

(30) Priorität: **18.05.89 CH 1860/89**

(43) Veröffentlichungstag der Anmeldung:
**22.11.90 Patentblatt 90/47**

(84) Benannte Vertragsstaaten:
**CH DE FR GB IT LI SE**

(71) Anmelder: **ASEA BROWN BOVERI AG**
**Haselstrasse**
**CH-5401 Baden(CH)**

(72) Erfinder: **Bossel, Ulf, Dr.**
**Baldeggstrasse 13**
**CH-5400 Baden(CH)**

(54) Vorrichtung zur Umwandlung chemischer Energie von Kohlenwasserstoffen in elektrische Energie mittels eines elektrochemischen Hochtemperaturprozesses.

(57) Vorrichtung zur Umwandlung chemischer Energie von Kohlenwasserstoffen in elektrische Energie mittels stapelartig angeordneter, plattenförmiger Hochtemperatur-Brennstoffzellen (5) auf der Basis von Zirkonoxyd als Feststoffelektrolyt, wobei zum Transport und zur Mischung eines Teils des $O_2$-Ueberschusses und Ballastgases mit dem gasförmigen Sauerstoffträger sowie zum Transport und zur Mischung eines Teils des Brennstoffüberschusses und der Reaktionsprodukte mit dem gasförmigen Brennstoff Gasstrahlpumpen (7; 8) und für die Durchführung der endothermen Konvertierungsreaktionen ein zentrales durchbrochenes Zuführungsrohr (9) und ein durchbrochener Körper (10) mit Katalysatorbeschichtung vorgesehen sind.

Fig.1

## Vorrichtung zur Umwandlung chemischer Energie von Kohlenwasserstoffen in elektrische Energie mittels eines elektrochemischen Hochtemperaturprozesses

### Technisches Gebiet

Hochtemperatur-Brennstoffzellen zur Umwandlung von chemischer Energie in elektrische Energie. Vorrichtungen zur elektrochemischen Energieumwandlung gewinnen dank ihrer einfachen Handhabung und ihres hohen Wirkungsgrades an Bedeutung.

Die Erfindung bezieht sich auf die Weiterentwicklung der elektrochemischen Hochtemperatur-Zellen unter Verwendung von keramischen Feststoffelektrolyten als Ionenleiter, wobei die Vorrichtung weitgehend unabhängig vom verwendeten Brennstoff sein soll.

Im engeren Sinne betrifft die Erfindung eine Vorrichtung zur Umwandlung chemischer Energie in elektrische Energie mittels eines elektrochemischen Hochtemperaturprozesses unter Verwendung von stapelartig angeordneten flachen, ebenen keramischen Brennstoffzellen auf der Basis von Zirkonoxyd als Feststoffelektrolyt, wobei jede Brennstoffzelle auf einer Seite vom gasförmigen Sauerstoffträger, auf der anderen Seite vom gasförmigen Brennstoff beaufschlagt ist.

### Stand der Technik

Es sind elektrochemische Anlagen zur Umwandlung der in einem gasförmigen Brennstoff enthaltenen chemischen Energie in elektrische Energie bekannt. Die bisher ausgeführten Brennstoffzellen arbeiten vorwiegend mit Wasserstoff oder Kohlenmonoxyd, gegebenenfalls mit einer Mischung dieser beiden Brennstoffe. Stehen Kohlenwasserstoffe wie beispielsweise Methan (Hauptbestandteil des Erdgases) zur Verfügung, so werden sie in der Regel zuvor durch einen Konvertierungsprozess in ein Gemisch von Wasserstoff und Kohlenmonoxyd umgewandelt. Da diese Prozesse endotherm verlaufen, sind sie mit einem beträchtlichen äusseren Wärmeaufwand verbunden. In der Regel werden zu diesem Zweck separate Konvertierungsanlagen betrieben und der Wärmebedarf durch Verbrennung eines Teils des gasförmigen Brennstoffs gedeckt. Es sind hierfür zusätzlich Aufbereitungsanlagen für Wasserdampf oder für Kohlendioxyd erforderlich.

Zum Stand der Technik werden die nachfolgenden Druckschriften genannt:
- O.Antonsen, W.Baukal und W.Fischer, "Hochtemperatur-Brennstoffbatterie mit keramischem Elektrolyten", Brown Boveri Mitteilungen Januar/Februar 1966, Seiten 21-30,
- US-A-4 692 274
- US-A-4 395 468
- W.J.Dollard und W.G.Parker, "An overview of the Westinghouse Electric Corporation solid oxide fuel cell program", Extended Abstracts, Fuel Cell Technology and Applications, International Seminar, Den Haag, Niederlande, 26. bis 29. Oktober, 1987,
- F.J. Rohr, High-Temperature Fuel Cells, Solid Electrolytes, 1978 by Academic Press, Inc., Seite 431 ff.
- D.C. Fee et al., Monolithic Fuel Cell Development, Argonne National Laboratory, Paper presented at the 1986 Fuel Cell Seminar, Oct. 26 - 29, 1986, Tucson, AZ, U.S. Department of Energy, the University of Chicago.

Die zur Konvertierung von primären Brennstoffen, insbesondere von Kohlenwasserstoffen, in geeignetere gasförmige Brennstoffe ($H_2$ und CO) notwendigen bekannten Einrichtungen sind aufwendig und erfordern zusätzliche Fördermittel und Steuerorgane (Pumpen, Ventile etc.). Auch erfordert ein derartiger Betrieb einen zusätzlichen Brennstoffaufwand, wodurch der Wirkugnsgrad herabgesetzt wird.

Die bisher bekannten Konstruktionen von keramischen Brennstoffzellen und Zellenbatterien lassen bezüglich Bauvolumen, Leistung und Wirkungsgrad sowie Führung der Ströme gasförmiger Medien zu wünschen übrig. Es existiert daher ein grosses Bedürfnis, Brennstoffzellen und ihre Anordnung in konstruktiver und betrieblicher Hinsicht zu verbessern.

### Darstellung der Erfindung

Der Erfindung liegt die Aufgabe zugrunde, eine Vorrichtung zur Umwandlung chemischer Energie von Kohlenwasserstoffen in elektrische Energie mittels eines elektrochemischen Hochtemperaturprozesses unter Verwendung von keramischen Brennstoffzellen auf der Basis von Zirkonoxyd als Feststoffelektrolyt anzugeben, welche bei optimaler Ausnutzung der beim Prozess anfallenden Wärme und womöglich ohne äussere Wärmezufuhr unter Ausnutzung endothermer Konvertierungsreaktionen einen höchstmöglichen Wirkungsgrad aufweist. Die Vorrichtung soll im Aufbau einfach sein und keinerlei zusätzliche aufwendige Apparaturen aufweisen. Sie soll zudem im Betrieb einfach zu handhaben sein und keine komplizierten Einrichtungen zur Temperatur- und Leistungsregulierung erfordern.

Diese Aufgabe wird dadurch gelöst, dass in der eingangs erwähnten Vorrichtung zum Transport und zur Mischung eines Teils des $O_2$-Ueberschusses und Ballastgases mit dem gasförmigen Sauerstoffträger mindestens eine Gasstrahlpumpe pro Einzelstapel von Brennstoffzellen und zum Transport und zur Mischung eines Teils des Brennstoffüberschusses und der gasförmigen Reaktionsprodukte $CO_2$ und $H_2O$ mit dem gasförmigen Brennstoff eine zentrale Gasstrahlpumpe vorgesehen ist und dass zur Durchführung der endothermen Konvertierungsreaktionen

$CH_4 + CO_2 \rightarrow 2CO + 2H_2$ und

$CH_4 + H_2O \rightarrow CO + 3H_2$

das zentrale durchbrochene Zuführungsrohr für den gasförmigen Brennstoff dient.

Der Leitgedanke der Erfindung besteht darin, Gasstrahlpumpen für die zirkulierenden gasförmigen Medien zu verwenden. Ferner soll die durch die ohmschen Verluste in der Brennstoffzelle anfallende Joule'sche Wärme möglichst in situ zur Deckung des Enthalpiebedarfs bei der Durchführung gezielter endothermer chemischer Reaktionen (Konvertierung) herangezogen werden.

Weg zur Ausführung der Erfindung

Die Erfindung wird anhand der nachfolgenden, durch Figuren näher erläuterten Ausführungsbeispiele beschrieben. Dabei zeigt:

Fig. 1 einen Aufriss (Längsschnitt) durch eine Vorrichtung bestehend aus stapelartig angeordneten Brennstoffzellen mit Gasstrahlpumpen und zentralem Körper mit Katalysator,

Fig. 2 einen Grundriss (Querschnitt) durch eine Vorrichtung bestehend aus stapelartig angeordneten Brennstoffzellen und zentralem Körper mit Katalysator,

Fig. 3 einen schematischen Längsschnitt (Aufriss) durch eine Vorrichtung stapelartig angeordneter Brennstoffzellen mit dem Strömungsbild des Kreislaufs des gasförmigen Brennstoffs,

Fig. 4 einen schematischen Längsschnitt (Grundriss) durch eine Vorichtung stapelartig angeordneter Brennstoffzellen mit dem Strömungsbild des Kreislaufs des gasförmigen Sauerstoffträgers.

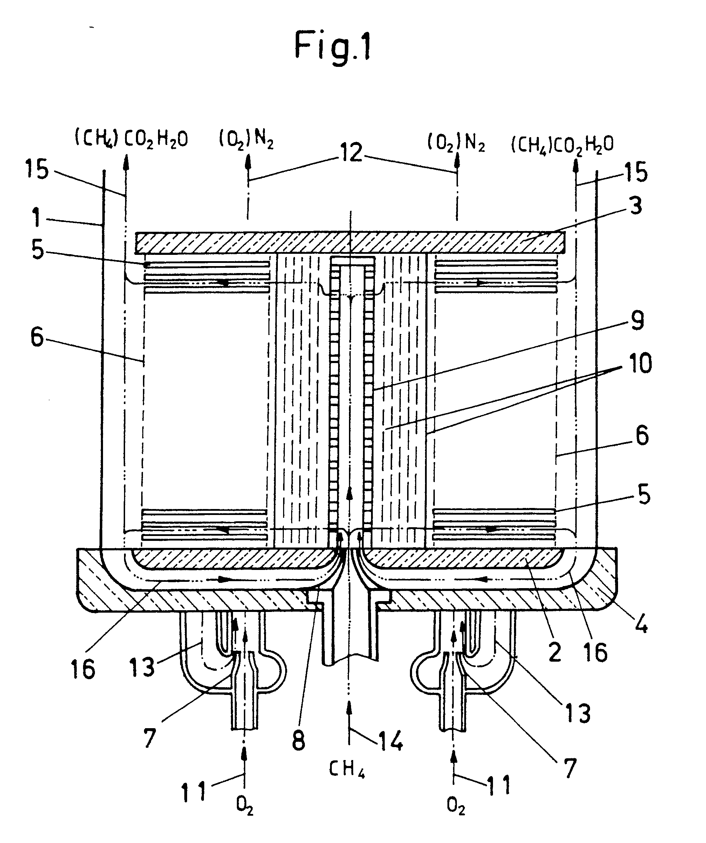

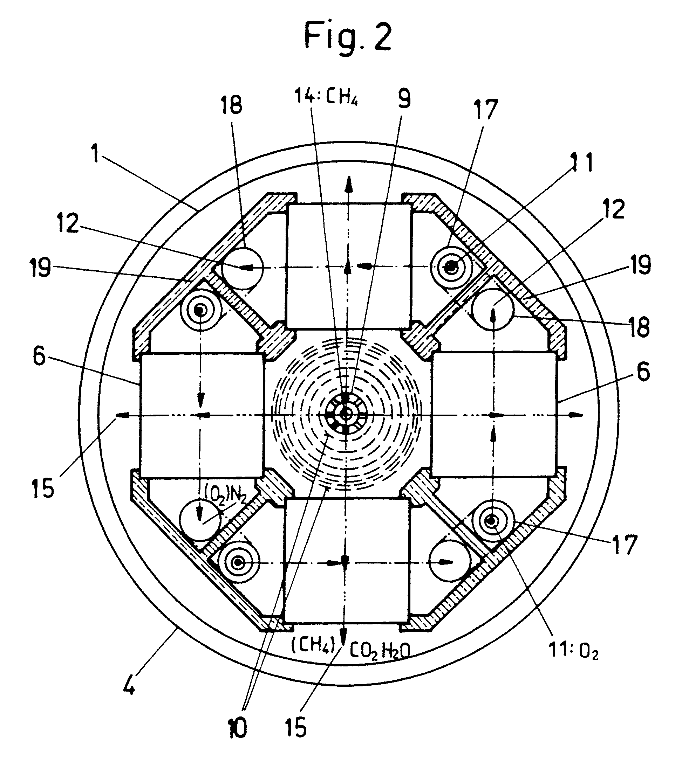

In Fig. 1 ist ein Aufriss (Längsschnitt) durch eine Vorrichtung bestehend aus stapelartig angeordneten Brennstoffzellen mit Gasstrahlpumpen und zentralem Körper mit Katalysator dargestellt. 1 ist ein wärmeisolierter Behälter (Isolation nicht dargestellt), in dem die aktiven Teile der Vorrichtung untergebracht sind. 2 ist die untere Abschlussplatte, 3 die obere Abschlussplatte des Behälters 1. Die Platten 2 und 3 bestehen vorzugsweise aus keramischem Werkstoff. 4 ist der Boden der Vorrichtung, der in vorteilhafter Weise ebenfalls aus keramischem Material gefertigt ist. 5 stellt eine einzelne Brennstoffzelle dar. Mit 6 ist der gesamte, aus Brennstoffzellen und Trennplatten bestehende Stapel (Begrenzung durch gestrichelte Linie angedeutet) bezeichnet. Im vorliegenden Fall sind vier Stapel 6 zentralsymmetrisch um die Mittelachse der Vorrichtung herum angeordnet (vgl. Fig. 2), von denen zwei im Aufriss sichtbar sind. 7 ist eine Gasstrahlpumpe für den gasförmigen Sauerstoffträger ($O_2$ oder Luft), welche die Mischung des letzteren mit dem $O_2$-Ueberschuss (Restsauerstoff) und dem Ballastgast (Stickstoff), falls vorhanden, sowie den Transport des resultierenden Gemisches der gasförmigen Medien zu den Brennstoffzellen 5 besorgt. Pro Stapel 6 ist mindestens eine Gasstrahlpumpe 7 vorhanden. Im Aufriss sind deren 2 eingezeichnet (eine Gasstrahlpumpe 7 pro Stapel 6). 8 ist eine Gasstrahlpumpe für den gasförmigen Brennstoff (beispielsweise $CH_4$), welche die Mischung des letzteren mit dem Brennstoffüberschuss (Restbrennstoff) und den gasförmigen Reaktionsprodukten (Kohlendioxyd, Wasserdampf) sowie den Transport des resul tierenden Gasgemisches zu den Brennstoffzellen 5 bewerkstelligt.

Die Zuleitung des gasförmigen Brennstoffs zu den Brennstoffzellen 5 erfolgt über ein zentrales durchbrochenes Zuführungsrohr 9 für sämtliche Stapel 6 gemeinsam. 10 ist ein durchbrochener Körper mit Katalysator-Beschichtung zwecks Beschleunigung der endothermen Konvertierungsreaktionen

$CH_4 + CO_2 \rightarrow 2CO + 2H_2$

$CH_4 + H_2O \rightarrow CO + 3H_2$

Der Körper 10 ist vorteilhafterweise als zentralsymmetrisches Bauteil mit hohlzylindrischen Begrenzungsflächen ausgeführt. Mit dem Pfeil 11 und dem Symbol $O_2$ ist die Zufuhr des gasförmigen Sauerstoffträgers zur Gasstrahlpumpe 7 bezeichnet. 12 ist die Abfuhr des $O_2$-Uberschusses und des Ballastgases (Stickstoff), Symbol ($O_2$)$N_2$. Ein Teil des letzteren Gasgemisches wird der Gasstrahlpumpe 7 zugeführt. Diese Rückführung ist mit 13 bezeichnete 14 ist die zentrale Zufuhr des gasförmigen Brennstoffs (im vorliegenden Fall Methan): Symbol $CH_4$. Das aus Restbrennstoff und Reaktionsprodukten bestehende Gasgemisch sammelt sich im ringförmigen Raum zwischen Behälter 1 und Stapel 6. Mit dem Pfeil 15 ist die Abfuhr des Brennstoffüberschusses und der gasförmigen Reaktionsprodukte (Kohlendioxyd, Wasserdampf) bezeichnet: Symbol ($CH_4$) $CO_2$ $H_2O$. 16 ist die Rückführung des Brennstoffüberschusses und der gasförmigen Reaktionsprodukte zur zentralen Gasstrahlpumpe 8.

Fig. 2 bezieht sich auf einen Grundriss (Querschnitt) durch eine Vorrichtung bestehend aus stapelartig angeordneten Brennstoffzellen und zentralem Körper mit Katalysator. 1 ist der wärmeisolierte Behälter, 4 der Boden der Vorrichtung. 6 ist je ein Stapel von Brennstoffzellen und Trennplatten. Es sind vier derartige Stapel 6 mit quadratischem Querschnitt (Grundriss) vorhanden.. Das zentrale durchbrochene Zuführungsrohr 9 für den gasförmigen Brennstoff ist im Querschnitt (Grundriss) sichtbar und zeigt deutlich die radialen Oeffnungen. Konzentrisch zum Zuführungsrohr 9 ist der durchbrochene hohlzylindrische Körper 10 mit Katalysator-Beschichtung angeordnet. Die Zufuhr 11 des gasförmigen Sauerstoffträgers (Symbol $O_2$) erfolgt senkrecht zur Zeichnungsebene und aus der letzteren heraustretend. Dies ist durch einen Doppelring mit Punkt im Querschnitt des Zuleitungsrohres 17 angedeutet. Die Abfuhr 12 des $O_2$-Ueberschusses und des Ballastgases ($N_2$) erfolgt teilweise aus der Zeichnungsebene heraustretend, teilweise in sie hineintretend. Dies wird durch das Ableitungsrohr 18 bewerkstelligt, dessen Längsrohre senkrecht auf der Plattenebene ( = Zeichnungsebene) steht. Die Zufuhr 14 des gasförmigen Brennstoffs (Symbol $CH_4$) erfolgt senkrecht zur Zeichnungsebene und aus der letzteren heraustretend. Dies ist durch einen Ring mit Punkt im Querschnitt des zentralen Zuführungsrohres 9 angedeutet. Die Abfuhr 15 des Brennstoffüberschusses und der gasförmigen Reaktionsprodukte ($CO_2$; $H_2O$) erfolgt teilweise aus der Zeichnungsebene heraustretend, teilweise in sie hineintretend. 19 ist ein leistenförmiger keramischer Körper mit T-förmigem Profil. Die Körper 19 bilden mit den Stapeln 6 eine mechanisch stabile Verbundkonstruktion. Die Rohre 17 und 18 befinden sich in je einer Nische des T-förmigen Profils des Körpers 19.

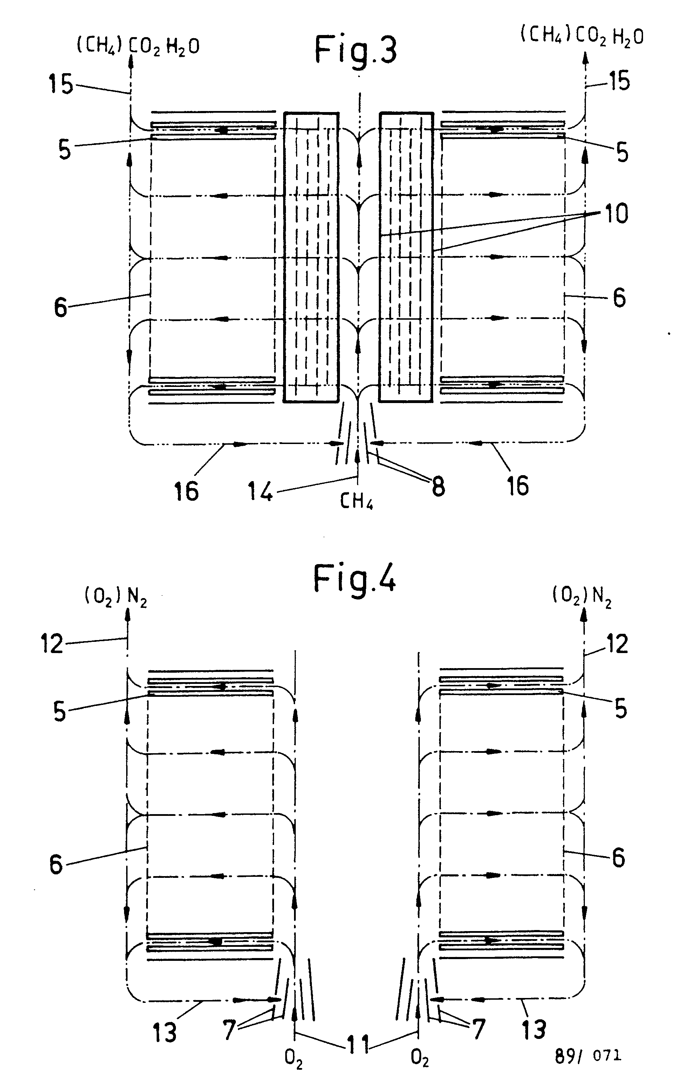

In Fig. 3 ist ein schematischer Längsschnitt (Aufriss) durch eine Vorrichtung stapelartig angeordneter Brennstoffzellen mit dem Strömungsbild des Kreislaufs des gasförmigen Brennstoffs dargestellt. Die Bezugszeichen sind die gleichen wie in Fig. 1 angegeben. Um die Uebersichtlichkeit nicht zu beeinträchtigen, sind nur die aktiven Teile Brennstoffzellen 5, Stapel 6, Gasstrahlpumpe 8 und Körper 10 mit Katalysator-Beschichtung dargestellt. Die Zufuhr 14 des gasförmigen Brennstoffs ($CH_4$) erfolgt über die zentrale Düse der Gasstrahlpumpe 8, die einen Teil des Brennstoffüberschusses und der gasförmigen Reaktionsprodukte ansaugt: Rückführung 16. Der Körper 10 und die Stapel 6 werden radial durchströmt. Der übrige Teil des Brennstoffüberschusses und der Reaktionsprodukte strömt nach oben ab: Abfuhr 15: Symbol ($CH_4$) $CO_2$ $H_2O$.

Fig. 4 zeigt einen schematischen Längsschnitt (Aufriss) durch eine Vorrichtung stapelartig angeordneter Brennstoffzellen mit dem Strömungsbild des Kreislaufs des gasförmigen Sauerstoffträgers. Die Bezugszeichen sind die gleichen wie in Fig. 1 angegeben. Pro Stapel 6 ist je eine Gasstrahlpumpe 7 vorhanden, die mit dem Sauerstoffträger

(Zufuhr 11, Symbol $O_2$) betrieben wird. Sie saugt einen Teil des $O_2$-Ueberschusses und des Ballastgases (im vorliegenden Fall $N_2$) an: Rückführung 13. Jeder Stapel 6 wird, bezogen auf die zentralsymmetrische Anordnung mehrerer Stapel, tangential durchströmt. Der übrige Teil des $O_2$-Ueberschusses und des Ballastgases strömt nach oben ab: Abfuhr 12: Symbol ($O_2$)$N_2$.

Ausführungsbeispiel 1:

Siehe Figuren 1 und 2!
Die Vorrichtung bestand aus einem wärmeisolierten Behälter 1 von 200 mm Innendurchmesser aus korrosionsbeständigem, warmfesten Cr/Ni-Stahl, in welchem 4 Stapel 6 von Brennstoffzellen und Trennplatten im Kreuz angeordnet waren. Konzentrisch zum Behälter 1 war ein weiterer Zylinder von 230 mm Aussendurchmesser angeordnet (in Fig. 1 und 2 nicht eingezeichnet), so dass ein Ringspalt von ca. 10 mm radialer Breite gebildet wurde. Durch diesen Ringspalt wurde der gasförmige Sauerstoffträger (Luft) zwecks Vorwärmung auf ca. 400 °C geleitet. Die einzelnen kermaischen Brennstoffzellen auf der Basis von dotiertem $ZrO_2$ als Feststoffelektrolyt hatten eine quadratische Fläche von 50 mm Seitenlänge. Der gesamte Stapel 6 hatte eine Höhe von 300 mm. Je 4 derartige Stapel 6 wurden durch leistenförmige keramische Körper 19 mit T-förmigem Profil, bestehend aus gesintertem $Al_2O_3$ seitlich fixiert und durch axiale Verankerungen zwischen oberer Abshclussplatte 3 und unterer Abschlussplatte 2 bzw. Boden 4 zusammengehalten. In den Ecken der Hohlräume der leistenförmigen Körper 19 waren Zuleitungsroahre 17 für die Luft und Ableitungsrohre 18a für den Luftüberschuss ($O_2$-Ueberschuss + Ballastgas $N_2$) abgeordnet. Der gesamte, aus STapeln 6 und Körpern 19 zusammengestellte Block hatte somit im Grundriss (Querschnitt) die Form eines Achtecks. In der Mittelachse der Vorrichtung befand sich das zentrale, durchbrochene Zuführungsrohr 9 für gasförmigen Brennstoff. Dieses aus keramischem Material bestehende Zuführugnsrohr 9 war von einer Anzahl koaxial angeordneter Zylinder aus Nickeldrahtgeflecht umgeben. Dieser durchbrochene Körper 10 wirkte als Ktalysator zur Beschleunigung der endothermen Reaktionen
$$CH_4 + CO_2 \rightarrow 2CO + 2H_2 \text{ und}$$
$$CH_4 + H_2O \rightarrow CO + 3H_2O$$
Im zentralen Bereich der unteren Abshclussplatte 2 und des Bodens 4 war die Gasstrahlpumpe 8 (Ejektor) für den gasförmigen Brennstoff $CH_4$ angeordnet. Die Gasstrahlpumpe 8 dien te zur teilweisen Rückführung 16 des Brennstoffüberschusses und der gasförmigen Reaktionsprodukte ($CO_2$ und $H_2O$) aus dem Raum der Abfuhr 15. Zu diesem Zweck waren im Bereich des Bodens 4 der Vorrichtung radiale Kanäle vorgesehen. Die an der Wand des wärmeisoleirten Behälters 1 vorgewärmte Luft wurde mit Ueberdurck den Gasstrahlpumpen 7 zugeführt. Pro Stapel 6 war je eine Gasstrahlpumpe 7 (Ejektor) vorgesehen, welche der teilweisen Rückführung 13 des $O_2$-Ueberschusses und des Ballastgases $N_2$ diente.

Die Vorrichtung wurde in der Weise betrieben, dass die Zufuhr 14 des gasförmigen Brennstoffs $CH_4$ mit einem Druck von ca. 3 bar erfolgte. Dabei war der Brennstoff zuvor auf ca. 500 °C vorgewärmt worden. Die Menge der Rückführung 16 des Brennstoffüberschusses und der gasförmigen Reaktionsprodukte betrug ca. das 3-fache der Zufuhr 14, wobei das rückgeführte gasförmige Medium eine Temperatur von ca. 900 °C aufwies. Der Mischgasstrom hatte demzufolge eine mittlere Temperatur von ca. 800 °C. Die Zufuhr 11 des gasförmigen Sauerstoffträgers Luft von 400 °C erfolgte mit einem Druck von ca. 2 bar. Die Menge der Rückführung 13 des $O_2$-Ueberschusses und des Ballastgases $N_2$ betrug ca. das 2,5-fache der Zufuhr 11, wobei das rückgeführte gasförmige Medium eine Temperatur von ca. 900 °C aufwies. Das resultierende Mischgas (Luftgemisch) hatte somit eine Temperatur von ca. 750 °C.

Ausführugnsbeispiel 2:

Grundsätzlich war die Vorrichtung ähnlich wie unter Beispiel 1 aufgebaut. Die Abmessungen und Anordnungen der Stapel 6 von Brennstoffzellen und Trennplatten waren die gleichen. Im Gegensatz zu Fig. 2 waren jedoch jetzt nur 2 Zuleitungsrohre 17 für gasförmigen Sauerstoffträger (Luft) vorhanden, die diagonal gegenüberliegend in je einem etwas anders ausgebildeten keramischen Körper 19 untergebracht waren. Auf diese Weise wurden zwei benachbarte Stapel 6 von je einem Zuleitungsrohr 17 gespeist. Die beiden Ableitungsrohre 18 für $O_2$-Ueberschuss und Ballastgas $N_2$ befanden sich auf der um 90° versetzten Diagonalen je in einer Nische des keramischen Körper 19. Grundsätzlich wurde am Kreuzstromprinzip zwischen Sauerstoffträger und Brennstoff gemäss Fig. 2 nichts geändert. Nur war die Strömungsrichtung des Sauerstoffträgers in zwei Stapeln 6 gerade umgekehrt.

Die Vorrichtung wurde gemäss den Parametern unter Beispiel 1 betrieben. Das Gerät leistete bei einer Betriebstemperatur von 900 °C ca. 1,2 kW. Die Brennstoffausnutzung betrug ca. 90%. Der Wirkungsgrad wurde zu 52% ermittelt.

Die Erfindung ist nicht auf die Ausführungsbeispiele beschränkt.

Die Vorrichtung zur Umwandlung chemischer Energie von Kohlenwasserstoffen in elektrische Energie mittels eines elektrochemischen Hochtemperaturprozesses besteht aus stapelartig angeordneten flachen, ebenen, plattenförmigen keramischen Brennstoffzellen 5 auf der Basis von Zirkonoxyd als Feststoffelektrolyt, indem jede Brennstoffzelle 5 auf einer Seite vom gasförmigen Sauerstoffträger, auf der anderen Seite vom gasförmigen Brennstoff beaufschlagt ist, wobei zum Transport und zur Mischung eines Teils des $O_2$-Ueberschusses und Ballastgases mit dem gasförmigen Sauerstoffträger mindestens eine Gasstrahlpumpe 7 pro Einzelstapel 6 von Brennstoffzellen 5 und zum Transport und zur Mischung eines Teils des Brennstoffüberschusses und der gasförmigen Reaktionsprodukte $CO_2$ und $H_2O$ mit dem gas förmigen Brennstoff eine zentrale Gasstrahlpumpe 8 vorgesehen ist und zur Durchführung der endothermen Konvertierungsreaktionen

$$CH_4 + CO_2 \rightarrow 2CO + 2H_2 \text{ und}$$
$$CH_4 + H_2O \rightarrow CO + 3H_2$$

ein zenrales, durchbrochenes Zuführungsrohr 9 für den gasförmigen Brennstoff dient. Vorzugsweise sind in einem wärmeisolierten Behälter 1 4 Einzelstapel 6 von Brennstoffzellen 5 symmetrisch um ein zentrales durchbrochenes Zuführungsrohr 9 für den gasförmigen Brennstoff angeordnet und der Zwischenraum zwischen dem Zuführungsrohr 9 und den Einzelstapeln 6 ist mit einem durchbrochenen hohlzylindrischen Körper 10 ausgefüllt, dessen Oberfläche mit einem die Konvertierungsreaktionen beschleunigenden Katalysator beschichtet ist.

In einer besonderen Ausführung der Vorrichtung ist pro Einzelstapel 6 für die Zufuhr 11 des gasförmigen Sauerstoffträgers mindestens ein sich im Sektor zwischen zwei benachbarten Einzelstapeln 6 angeordnetes Zuleitungsrohr 7 und für die Abfuhr 12 des $O_2$-Ueberschusses und des Ballastgases mindestens ein daneben angeordnetes Ableitungsrohr 18 vorgesehen, wobei die Achsen dieser Rohre senkrecht auf der Plattenebene stehen. In einer weiteren Ausführung der Vorrichtung zwischen je zwei benachbarten Einzelstapeln 6 ein leistenförmiger keramischer Körper 19 mit T-förmigem abgewinkeltem Profil mit seiner Längsachse senkrecht auf der Plattenebene stehend, angeordnet, in dessen Nischen sowohl das Zuleitungsrohr 17 als auch das Ableitungsrohr 18 untergebracht ist, wobei durch die keramischen Körper 19 der ganze, aus mehreren Einzelstapeln 6 bestehende aktive Teil der Vorrichtung zusammengehalten ist.

## Ansprüche

1. Vorrichtung zur Umwandlung chemischer Energie von Kohlenwasserstoffen in elektrische Energie mittels eines elektrochemischen Hochtemperaturprozesses unter Verwendung von stapelartig angeordneten flachen, ebenen, plattenförmigen keramischen Brennstoffzellen (5) auf der Basis von Zirkonoxyd als Feststoffelektrolyt, wobei jede Brennstoffzelle (5) auf einer Seite vom gasförmigen Sauerstoffträger, auf der anderen Seite vom gasförmigen Brennstoff beaufschlagt ist, dadurch gekennzeichnet, dass zum Transport und zur Mischung eines Teils des $O_2$-Ueberschusses und Ballastgases mit dem gasförmigen Sauerstoffträger mindestens eine Gasstrahlpumpe (7) pro Einzelstapel (6) von Brennstoffzellen (5) und zum Transport und zur Mischung eines Teils des Brennstoffüberschusses und der gasförmigen Reaktionsprodukte $CO_2$ und $H_2O$ mit dem gasförmigen Brennstoff eine zentrale Gasstrahlpumpe (8) vorgesehen ist und dass zur Durchführung der endothermen Konvertierungsreaktionen

$$CH_4 + CO_2 \rightarrow 2CO + 2H_2 \text{ und}$$
$$CH_4 + H_2O \rightarrow CO + 3H_2$$

ein zentrales, durchbrochenes Zuführungsrohr (9) für den gasförmigen Brennstoff dient.

2. Vorrichtung nach Anspruch 1, dadurch gekennzeichnet, dass in einem wärmeisolierten Behälter (1) 4 Einzelstapel (6) von Brennstoffzellen (5) symmetrisch um ein zentrales durchbrochenes Zuführungsrohr (9) für den gasförmigen Brennstoff angeordnet sind und dass der Zwischenraum zwischen dem Zuführungsrohr (9) und den Einzelstapeln (6) mit einem durchbrochenen hohlzylindrischen Körper (10) ausgefüllt ist, dessen Oberfläche mit einem die Konvertierungsreaktionen beschleunigenden Katalysator beschichtet ist.

3. Vorrichtung nach Anspruch 2, dadurch gekennzeichnet, dass pro Einzelstapel (6) für die Zufuhr (11) des gasförmigen Sauerstoffträgers mindestens ein sich im Sektor zwischen zwei benachbarten Einzelstapeln (6) angeordnetes Zuleitungsrohr (17) und für die Abfuhr (12) des $O_2$-Ueberschusses und des Ballastgases mindestens ein daneben angeordnetes Ableitungsrohr (18) vorgesehen ist, wobei die Achsen dieser Rohre senkrecht auf der Plattenebene stehen.

4. Vorrichtung nach Anspruch 3, dadurch gekennzeichnet, dass zwischen je zwei benachbarten Einzelstapeln (6) ein leistenförmiger keramischer Körper (19) mit T-förmigem abgewinkeltem Profil mit seiner Längsachse senkrecht auf der Plattenebene stehend, angeordnet ist, in dessen Nischen sowohl das Zuleitungsrohr (17) als auch das Ableitungsrohr (18) untergebracht ist und dass durch die keramischen Körper (19) der ganze, aus mehreren Einzelstapeln (6) bestehende aktive Teil der Vorrichtung zusammengehalten ist.

# Fig.1

# Fig. 2

# Fig.3

# Fig.4

89/071

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| A | US-A-3 718 506 (W. FISCHER et al.) * Figuren 1,2; Spalte 3, Zeile 48 - Spalte 4, Zeile 7; Spalte 5, Zeile 58 - Spalte 6, Zeile 10; Patentanspruch 1 * --- | 1 | H 01 M 8/24 H 01 M 8/06 |
| A | EP-A-0 266 861 (WESTINGHOUSE ELECTRIC CORP.) --- | | |
| A | CHEMIE-ING.-TECHN., Band 44, Nr. 11, Juni 1972, Seiten 726-732; W. FISCHER et al.: "Hochtemperatur-Brennstoffzellen mit keramischen Elektrolyten zur Umsetzung billiger Brennstoffe" * Figur 2; Seite 727, linke Spalte, Absatz 6 - rechte Spalte, Absatz 2 * ----- | | |

RECHERCHIERTE SACHGEBIETE (Int. Cl.5)

H 01 M

Der vorliegende Recherchenbericht wurde für alle Patentansprüche erstellt

| Recherchenort | Abschlußdatum der Recherche | Prüfer |
|---|---|---|
| DEN HAAG | 27-06-1990 | D'HONDT J.W. |